(19) Europäisches Patentamt / European Patent Office / Office européen des brevets

(11) **EP 4 729 262 A1**

(12) **EUROPEAN PATENT APPLICATION**
published in accordance with Art. 153(4) EPC

(43) Date of publication:
**22.04.2026 Bulletin 2026/17**

(21) Application number: **24823500.4**

(22) Date of filing: **17.06.2024**

(51) International Patent Classification (IPC):
**B29B 7/28** (2006.01)    **B01F 27/722** (2022.01)
**B01F 27/1144** (2022.01)    **B01F 27/2322** (2022.01)
**B01F 35/22** (2022.01)    **B01F 35/32** (2022.01)
**B01F 35/33** (2022.01)    **B01F 35/212** (2022.01)
**B01F 35/213** (2022.01)    **B29B 7/18** (2006.01)

(52) Cooperative Patent Classification (CPC):
**B01F 27/1144; B01F 27/2322; B01F 27/722;
B01F 35/212; B01F 35/213; B01F 35/22;
B01F 35/32; B01F 35/33; B29B 7/18; B29B 7/20;
B29B 7/28**

(86) International application number:
**PCT/JP2024/021947**

(87) International publication number:
**WO 2024/257887 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.06.2023 JP 2023099690**

(71) Applicant: Suzuka Engineering Co., Ltd.
Yokkaichi-shi, Mie 510-0951 (JP)

(72) Inventor: YADA, Tatsuo
Yokkaichi-shi, Mie 510-0951 (JP)

(74) Representative: Henkel & Partner mbB
Patentanwaltskanzlei, Rechtsanwaltskanzlei
Maximiliansplatz 21
80333 München (DE)

(54) **METHOD FOR EVALUATING KNEADING STATE AND KNEADER**

(57)     Provided are a method for evaluating a kneading state in which a change in physical properties of a kneading material can be grasped in a sealed kneader including a pair of rotors, and a kneader. In the method for evaluating a kneading state in a sealed kneader 1 including a pair of rotors connected by a pair of gears and rotated by driving of an electric motor, a temperature of a kneading material, a pressure of a pressurizing lid in the kneader, an effective value of an alternating current supplied to the electric motor, a direct current value supplied to the electric motor, a power value consumed by the electric motor, a load ratio of the electric motor, an output torque of the electric motor, a number of rotations per minute of the rotor, or an angular velocity of the rotor are repeatedly sampled and acquired, and a moving average of the acquired input value over a predetermined arbitrary time span, a variance over an arbitrary time span, a standard deviation over an arbitrary time span, a deviation between the input value and the moving average over the arbitrary time span, a value acquired by processing these, or a combination of these are used as an evaluation index.

Fig.1

**Description**

TECHNICAL FIELD

The present invention relates to a method for evaluating a kneading state when a kneading material such as rubber, plastic, or ceramics is kneaded by a kneader, for example, in a batch process, and a kneader.

BACKGROUND ART

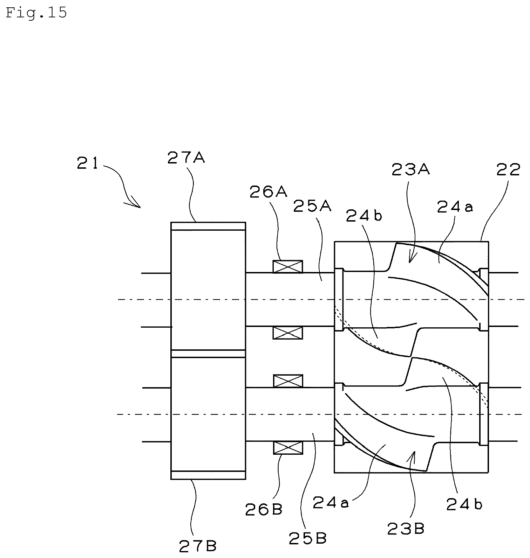

Conventionally, a sealed kneader has been known as an apparatus for mixing various kneading materials (see, for example, Patent Document 1). In this sealed kneader, after a kneading material is put into a kneading tank, two kneading rotors rotate to mix the kneading material. Generally, as kneading rotors of a sealed kneader, intermeshing rotors in which two kneading rotors rotate so as to mesh with each other and tangential (non-meshing) rotors are known.
Here, FIG. 15 illustrates an example of a sealed kneader equipped with tangential rotors. FIG. 15 is a schematic plan view of the kneader. In FIG. 15, a sealed kneader 21 includes a kneading tank 22, two kneading rotors 23A and 23B provided in parallel in the kneading tank 22, bearings 26A and 26B that rotatably support rotor shafts 25A and 25B of the kneading rotors 23A and 23B, and a pair of gears 27A and 27B. Spiral blades 24a and 24b are formed on the outer peripheries of the kneading rotors 23A and 23B, respectively.
In FIG. 15, one rotor shaft (for example, 25A) among the rotor shafts 25A and 25B is connected to a drive means such as a motor, and the other rotor shaft (for example, 25B) is connected to the one rotor shaft via the pair of gears 27A and 27B. Then, the rotor shaft 25A is rotationally driven by the drive means, so that the kneading rotors 23A and 23B rotate to mix a kneading material. In this case, the kneading rotor 23A connected to the drive means corresponds to the drive rotor, and the kneading rotor 23B corresponds to the driven rotor.
In the sealed kneader including tangential rotors as illustrated in FIG. 15, generally, a speed difference of about 15% to 25% is usually provided between the drive rotor and the driven rotor by making gear ratios in the pair of gears different. By rotating these kneading rotors at different speeds, the phase between the drive rotor and the driven rotor is changed, and it is thought that kneading is uniformly performed.

PRIOR ART DOCUMENTS

PATENT DOCUMENT

Patent Document 1: JP H09-313916 A
Patent Document 2: WO 2021/033390 A

SUMMARY OF THE INVENTION

PROBLEMS TO BE SOLVED BY THE INVENTION

Conventionally, in a sealed kneader including tangential rotors, the end of kneading is performed using (1) kneading time, (2) temperature of a kneading material, (3) power consumption, and combinations thereof as indices. For example, the temperature of the kneading material rises as the kneading progresses. In a case where the temperature of the kneading material is used as an index, the end timing of kneading is determined, for example, by the fact that the temperature has reached a predetermined temperature. However, the index used conventionally mainly indicates an energy input amount during kneading, and it is difficult to grasp a change in physical properties of the kneading material during kneading.
Meanwhile, in recent years, as a determination system for determining the state of an object to be stirred, there has been developed a system including: an acquisition unit configured to acquire waveform data indicating a waveform related to a current supplied to a drive device of a stirrer including a mechanism unit that stirs the object to be stirred and the drive device that drives the mechanism unit; and a determiner configured to determine a state of the object to be stirred on the basis of a change attributable to a component in a specific direction of a force acting on the drive device acquired from the waveform data (see Patent Document 2). In Patent Document 2, the current supplied to the drive device is an alternating current having a reference frequency, and in this technique, waveform data of the alternating current, that is, an instantaneous value of the alternating current is used. Specifically, an instantaneous value waveform of an alternating current that is a sine wave is input, and the state of the object to be stirred is determined by focusing on the output reference frequency component and other components. As described above, there is a demand for a new method for grasping a change in physical properties of a kneading material during kneading.

The present invention has been made in view of such circumstances, and an object of the present invention is to provide a method for evaluating a kneading state in which a change in physical properties of a kneading material can be grasped in a sealed kneader including a pair of rotors, and a kneader.

MEANS FOR SOLVING THE PROBLEM

A method for evaluating a kneading state according to the present invention is, in one mode, a method for evaluating a kneading state in a kneader including a pair of rotors connected by a pair of gears and rotated by driving of an electric motor, the method including: repeatedly sampling and acquiring a temperature of a kneading material, a pressure of a pressurizing lid in the kneader, an effective value of an alternating current supplied to the electric motor, a direct current value supplied to the electric motor, a power value consumed by the electric motor, a load ratio of the electric motor, an output torque of the electric motor, a number of rotations per minute of the rotor, or an angular velocity of the rotor; and using a moving average of the acquired input value over a predetermined arbitrary time span, a variance over an arbitrary time span, a standard deviation over an arbitrary time span, a deviation between the input value and the moving average over the arbitrary time span, a value acquired by processing these, or a combination of these, as an evaluation index.

Here, a series of input values acquired by the repeated sampling, recorded with their sampling times in chronological order, is referred to as time-series data. In particular, the series of input values acquired by sampling and recorded directly is referred to as original time series data. The evaluation method includes an aspect in which the kneader is monitored in real time in addition to an aspect in which the recorded data is analyzed and evaluated later. Note that, as described above, "using as an evaluation index" is a concept including not only a case where the aforementioned is directly used as an evaluation index but also a case where a value (for example, a value obtained by first differentiating a moving average over a predetermined arbitrary time span, a value obtained by higher differentiation than or equal to second differentiation, a value processed by a low-pass filter, a combination thereof, or the like) obtained by processing the aforementioned is used as an evaluation index. The time-series data including the processed values is referred to as derived time-series data.

In the kneader, the pair of rotors are tangential rotors, the gears each have a different integer number of teeth, and the pair of rotors rotate at different speeds, and the evaluation method uses, for the arbitrary time span, a period until the pair of rotors recover to the same phase immediately before the current time of the input value, and uses a moving average over the period, a variance over the period, a standard deviation over the period, a deviation between the input value and the moving average over the period, or a combination of these as an evaluation index.

In a case where the rotation speed of the pair of rotors changes halfway in the kneader, the arbitrary time span is changed in accordance with the change in the rotation speed, and a moving average over the changed time span, a variance over the changed time span, a standard deviation over the changed time span, a deviation between the input value and the moving average over the changed time span, or a combination thereof are calculated. For example, as the changed time span, a period until one of the pair of rotors rotates a certain number of times after the rotation speed has changed may be used.

In addition, a method for evaluating a kneading state according to the present invention is a method for evaluating a kneading state in a kneader including a pair of rotors connected by a pair of gears and rotated by driving of an electric motor, the method including: repeatedly sampling and acquiring a temperature of a kneading material, a pressure of a pressurizing lid in the kneader, an effective value of an alternating current supplied to the electric motor, a direct current value supplied to the electric motor, a power value consumed by the electric motor, a load ratio of the electric motor, an output torque of the electric motor, a number of rotations per minute of the rotor, or an angular velocity of the rotor; and using, as an evaluation index, a moving average of the acquired input value over a predetermined arbitrary number of rotations of one of the rotors (e.g., the driving side rotor), a variance over an arbitrary number of rotations, a standard deviation over an arbitrary number of rotations, a deviation between the input value and the moving average over the arbitrary number of rotations, a value acquired by processing these, or a combination thereof.

An end timing is determined on the basis of the fact that the variance, the standard deviation, or the deviation is equal to or less than a determination threshold. In addition, the end timing may be determined on the basis of the fact that the value of the input value at the current time falls within a range of 80% to 120% of the moving average for a predetermined time.

The kneader is a kneader that kneads a non-Newtonian fluid. Specific examples of the non-Newtonian fluid include rubber, plastic, ceramics, silicone, and a chewing gum composition.

A kneader according to the present invention is, in one mode, a kneader including a pair of rotors connected by a pair of gears and rotated by driving of an electric motor, further including: an acquisition unit configured to repeatedly sample and acquire a temperature of a kneading material, a pressure of a pressurizing lid in the kneader, an effective value of an alternating current supplied to the electric motor, a direct current value supplied to the electric motor, a power value consumed by the electric motor, a load ratio of the electric motor, an output torque of the electric motor, a number of rotations per minute of the rotor, or an angular velocity of the rotor; and a calculation unit configured to calculate a moving average of the input value acquired by the acquisition unit over a predetermined arbitrary time span, a variance over an arbitrary time span, a standard deviation over an arbitrary time span, a deviation between the input value and the moving average over the arbitrary time span, a value acquired by processing these, or a combination of these.

In the kneader, the pair of rotors are tangential rotors, the gears each have a different integer number of teeth, and the pair of tangential rotors rotate at different speeds, and the calculation unit uses, for the arbitrary time span, a period until the pair of rotors recover to the same phase immediately before the current time of the input value, and calculates a moving average over the period, a variance over the period, a standard deviation over the period, a deviation between the input value and the moving average over the period, or a combination of these.

In a case where the rotation speed of the pair of rotors changes halfway in the kneader, the calculation unit changes the arbitrary time span in accordance with the change in the rotation speed, and calculates a moving average over the changed time span, a variance over the changed time span, a standard deviation over the changed time span, a deviation between the input value and the moving average over the changed time span, or a combination of these.

In addition, a kneader according to the present invention is, in another mode, a kneader including a pair of rotors connected by a pair of gears and rotated by driving of an electric motor, further including an acquisition unit configured to repeatedly sample and acquire a temperature of a kneading material, a pressure of a pressurizing lid in the kneader, an effective value of an alternating current supplied to the electric motor, a direct current value supplied to the electric motor, a power value consumed by the electric motor, a load ratio of the electric motor, an output torque of the electric motor, a number of rotations per minute of the rotor, or an angular velocity of the rotor; and a calculation unit configured to calculate a moving average of the acquired input value acquired by the acquisition unit of one rotor over a predetermined arbitrary number of rotations, a variance over an arbitrary number of rotations, a standard deviation over an arbitrary number of rotations, a deviation between the input value and the moving average over the arbitrary number of rotations, a value acquired by processing these, or a combination of these.

A determiner is included, which determines an end timing on the basis of the fact that the variance, the standard deviation, or the deviation calculated by the calculation unit is equal to or less than a determination threshold. A determiner may be included, which determines an end timing on the basis of the fact that a value of the input value at the current time falls within a range of 80% to 120% of the moving average calculated by the calculation unit for a predetermined time.

EFFECT OF THE INVENTION

A method for evaluating a kneading state according to one mode of the present invention is a method for evaluating a kneading state in a kneader including a pair of rotors connected by a pair of gears and rotated by driving of an electric motor. In this evaluation method, a temperature of a kneading material, a pressure of a pressurizing lid in the kneader, an effective value of an alternating current supplied to the electric motor, a direct current value supplied to the electric motor, a power value consumed by the electric motor, a load ratio of the electric motor, an output torque of the electric motor, a number of rotations per minute of the rotor, or an angular velocity of the rotor are repeatedly sampled and acquired. A moving average of the acquired input value over a predetermined arbitrary time span, a variance over an arbitrary time span, a standard deviation over an arbitrary time span, a deviation between the input value and the moving average over the arbitrary time span, a value acquired by processing these, or a combination of these are used as an evaluation index, so that a change in physical properties such as viscosity, variance, and homogenization of the kneading material during kneading can be satisfactorily grasped. For example, by accurately grasping the end timing of the batch process, effects can be expected, such as improving stability of physical properties between batches, increasing productivity per unit time, and reducing energy consumption by preventing excessive energy input.

In particular, in a case where the pair of rotors are tangential rotors in the kneader and the pair of tangential rotors are configured to rotate at different speeds, by using, as an evaluation index, a moving average over a period until the pair of rotors recover to the same phase immediately before the current time of the input value, a variance over the period, a standard deviation over the period, a deviation between the input value and the moving average over the period, or a combination of these, a state in each cycle in which the pair of rotors recover to the same phase can be more accurately grasped, and eventually, a change in physical properties of the kneading material during kneading can be satisfactorily grasped.

In a method for evaluating a kneading state according to another mode of the present invention, by repeatedly sampling and acquiring each parameter, and then using, as an evaluation index, a moving average of the acquired input value of one rotor over a predetermined arbitrary number of rotations, a variance over an arbitrary number of rotations, a standard deviation over an arbitrary number of rotations, a deviation between the input value and the moving average over the arbitrary number of rotations, or a value obtained by processing the deviation, or a combination of these, whereby a change in physical properties such as viscosity, variance, and homogenization of the kneading material during kneading can be satisfactorily grasped, and by setting the number of rotations as an axis (reference), a state in each cycle in which the pair of rotors recovers to the same phase can be more accurately grasped, which eventually leads to a better grasp of the changes in the physical properties of the kneading material during kneading. It is also possible to cope with a change in the number of rotations of the rotor.

The end timing is determined on the basis of the fact that the variance, standard deviation, or deviation is equal to or less than the determination threshold, that is, the fact that the variation in the input value (temperature, power value, or the like) is reduced, so that the end timing of kneading can be quickly and accurately determined.

BRIEF DESCRIPTION OF THE DRAWINGS

FIG. 1 is an explanatory view illustrating an overall schematic configuration of a kneader according to the present invention.

FIG. 2 is a diagram for explaining driving of the kneading rotors of the kneader in FIG. 1.

FIG. 3 is a diagram illustrating an example of the number of teeth of a pair of gears.

FIG. 4 is a flowchart for explaining an example of processing executed by a controller.

FIG. 5 is a conceptual diagram of calculation of simple moving average SMA.

FIG. 6 is a graph illustrating temporal variation of each parameter in the conventional technique.

FIG. 7 is a graph illustrating temporal variation of each parameter in the present invention.

FIG. 8 is a graph illustrating temporal variation of each parameter in the present invention

FIG. 9 is a graph illustrating temporal variation of a power value after processing of another moving average.

FIG. 10 is a graph illustrating temporal variation of a power value after low-pass filtering.

FIG. 11 is a graph in which smoothing processes are superimposed.

FIG. 12 is a graph illustrating temporal variation of each parameter in the present invention and the conventional technique.

FIG. 13 is a graph showing an example of acquisition of extreme values (maximum value/minimum value).

FIG. 14 is a graph illustrating an example of acquisition of an inflection point.

FIG. 15 is a diagram for explaining driving of kneading rotors of a kneader in the conventional art.

MODE FOR CARRYING OUT THE INVENTION

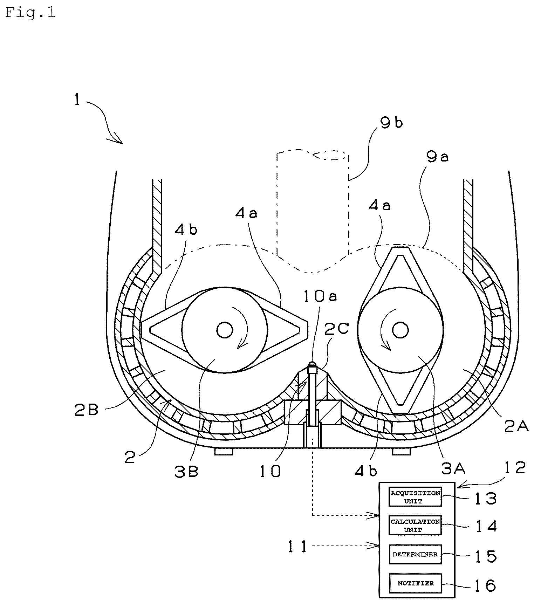

A kneader used in the method for evaluating a kneading state of the present invention is a sealed kneader for kneading a non-Newtonian fluid containing rubber, plastic, or the like. FIG. 1 is an explanatory view illustrating an overall schematic configuration of the kneader according to the present invention, and is a schematic cross-sectional view mainly of a kneading tank located at a lower end of the kneader.

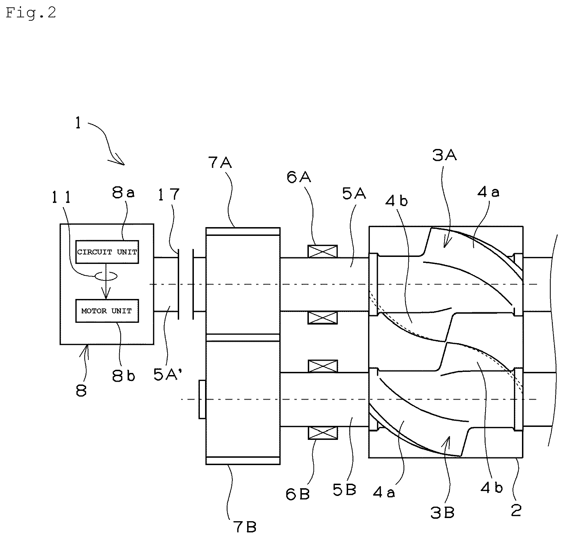

As illustrated in FIG. 1, a sealed kneader 1 mainly includes a kneading mechanism including a kneading tank 2 and an electric motor 8 (see FIG. 2), a pressurizing mechanism including a pressurizing lid 9a that pressurizes kneading materials fed into the kneading tank, and a controller 12 that controls kneading of the kneading material. In the evaluation method and the kneader of the present invention, in particular, a kneading parameter detected by a sensor or the like is repeatedly sampled and acquired, and a calculated value obtained by performing predetermined calculation processing on an acquired input value is used as an evaluation index. Specifically, a parameter indicating a variation such as an average value, a variance, or a standard deviation over a predetermined arbitrary time span or an arbitrary number of rotations of the rotor of the input value is used as the evaluation index.

The kneading tank 2 has an inner peripheral surface shape in which two substantially C-shaped partial circumferential surfaces are connected facing each other, and two rotor chambers 2A and 2B adjacent to and connected with each other are provided in the kneading tank 2. The inner bottom of the kneading tank 2 is provided, at its boundary between the inner peripheral surfaces of the rotor chambers 2A and 2B, with a ridge wall portion 2C rising in a chevron shape. Both axial ends of each of the rotor chambers 2A and 2B are closed by a chamber end wall (not illustrated). Note that the cross-sectional shapes of the rotor chambers 2A and 2B are constant in the axial direction.

The sealed kneader 1 includes a temperature sensor 10 that detects the temperature in the kneading tank during kneading. The temperature sensor 10 is disposed such that a detection end 10a protrudes from the upper surface of the ridge wall portion 2C, and can detect the temperature of the kneading material in contact with the detection end 10a. A well-known temperature sensor is used as the temperature sensor 10, and for example, a thermocouple temperature detector that accommodates a thermocouple element in a protective tube and measures temperature is used. As the thermocouple temperature detector, for example, a grounded type in which the thermocouple element tip is welded to the tip of the protective tube and the temperature of the kneading material is sensed on the outer surface of the protective tube, or a non-grounded type in which the thermocouple element is insulated from the protective tube and the temperature of the inside of the protective tube is sensed can be used.

Note that the temperature sensor provided in the sealed kneader 1 is not limited to the sensor configuration or arrangement illustrated in FIG. 1 as long as the temperature sensor detects the temperature of the kneading material during kneading. The temperature change of the kneading material detected by the temperature sensor will be described later.

As illustrated in FIG. 1, in the rotor chambers 2A, 2B, kneading rotors 3A, 3B that mix the kneading material are rotatably installed at a gap with the inner peripheral surfaces of the rotor chambers 2A, 2B, respectively. The kneading rotors 3A and 3B each include a plurality of (two in FIG. 1) blades 4a and 4b. Each of the blades 4a and 4b has a cross-sectional shape having a chevron shape from the side of the starting portion toward the side of the ending portion, and has a land portion at the top thereof. The land portion rotates while maintaining a predetermined gap with the inner peripheral surface. As the kneading rotors 3A and 3B rotate, the shape of the kneading space in the rotor chambers 2A and 2B changes. The kneading rotors 3A and 3B have different rotation directions, and are configured such that the blades rotate downward on the side where the rotor chambers 2A and 2B are connected with each other.

An opening for feeding kneading materials is provided above the kneading tank 2. The pressurizing lid 9a is movable up and down by a cylinder device or the like, and the kneading material is fed from the opening in a state where the pressurizing lid 9a is raised. Thereafter, the pressurizing lid 9a is lowered by a rod 9b, and the two kneading rotors 3A and 3B are rotated while pressurizing the kneading material. In this case, the kneading material is kneaded by the flow in complex directions including not only the rotation direction of the rotors but also the axial direction by the blades 4a and 4b having a spiral shape.

The kneader according to the present invention is not limited to the configuration of FIG. 1. The sealed kneader 1 of FIG. 1 is a type in which the kneading tank 2 is reversed after kneading to take out the kneading material from the opening, but for example, the kneader may be a type in which the kneading material is taken out from the bottom of the kneading tank after kneading. The sealed kneader 1 illustrated in FIG. 1 is of a tangential type in which the rotating regions of the kneading rotors 3A and 3B do not overlap. Alternatively, the sealed kneader 1 may be of a meshing type in which the rotating regions of the kneading rotors 3A and 3B rotate at a constant speed overlap.

FIG. 2 is a schematic plan view of the sealed kneader. As illustrated in FIG. 2, the sealed kneader 1 includes the kneading tank 2, the kneading rotors 3A and 3B, bearings 6A and 6B that rotatably support rotor shafts 5A and 5B, and a pair of gears 7A and 7B. The spiral blades 4a and 4b are formed on the outer peripheries of the kneading rotors 3A and 3B. For example, in the kneading rotor 3A, the blades 4a and 4b have their respective starting portions on both axial ends of the kneading rotor 3A where their circumferential phases differ by 180° from each other, and extend from these starting portions along the outer circumference of the kneading rotor 3A in a spiral direction. The configuration of the blades in the kneading rotor is not limited thereto. In FIG. 2, the lengths of the blades 4a and 4b in the spiral direction are different from each other, and the blade 4a is a long blade and the blade 4b is a short blade. The number of blades is not limited to two, and may be three, four, six, or the like. In this case, for example, the position (phase in the circumferential direction) of the starting portion between the blades is appropriately set according to the number of blades.

In the sealed kneader 1, the rotor shafts 5A and 5B of the two kneading rotors 3A and 3B are disposed in parallel. The rotor shaft 5A is connected to an output shaft 5A' of the electric motor 8 via a coupling 17. Note that the rotor shafts 5A and 5A' may be integrally configured by omitting the coupling 17. On the other hand, the rotor shaft 5B is connected to the rotor shaft 5A via the pair of gears 7A and 7B. The electric motor 8 includes a circuit unit 8a and a motor unit 8b. The circuit unit 8a generates power on the basis of a control signal, and supplies the generated power to the motor unit 8b. The electric motor 8 includes a power sensor 11 that detects power supplied to the motor unit 8b. In the present invention, the electric motor may be an alternating current electric motor driven by an alternating current power supply or a direct current electric motor driven by a direct current power supply.

Note that the electric motor 8 may include a speed reducer, and the rotational force generated from the drive source may be decelerated and output. In addition, the pair of gears 7A and 7B is not limited to gears provided outside the electric motor 8 as illustrated in FIG. 2, and may be gears incorporated in the electric motor 8 or a speed reducer. The configuration of the gear is not limited to the spur gear, and may be a helical gear or the like. Further, in the kneader, each kneading rotor may be connected to the corresponding gear via a coupling.

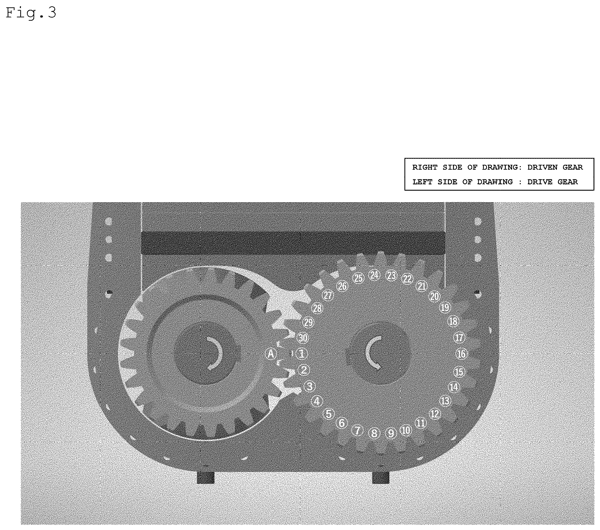

In the configuration of FIG. 2, the rotor shafts 5A and 5B rotate by driving the electric motor 8, so that the kneading rotors 3A and 3B rotate to perform kneading. In FIG. 2, the sealed kneader 1 has a configuration in which the pair of kneading rotors 3A and 3B rotate at different speeds. The number of teeth of the pair of gears 7A and 7B is not particularly limited, but a combination of the number of teeth of different integers that are not prime to each other is more effective because it takes a shorter time to recover to the same phase (for example, see FIG. 3). In FIG. 2, the kneading rotor 3A corresponds to a drive rotor, and the kneading rotor 3B corresponds to a driven rotor.

In the configuration in which the pair of kneading rotors 3A and 3B rotate at different speeds, the combination of the number of teeth is not particularly limited, but for example, the number of teeth of the gear having the larger number of teeth is preferably 10% to 50% larger than the number of teeth of the other gear. Further, in a case where the number of teeth of the pair of gears is such that the high-speed rotor (drive rotor) and the low-speed rotor (driven rotor) return to the same phase within 10 rotations of the high-speed rotor, the period can be adopted as the moving average time. This allows the convergence of the variance and standard deviation to be determined more clearly.

Returning to FIG. 1, the controller 12 mainly includes a microcomputer including a known CPU, ROM, RAM, and the like. The sensors 10 and 11 included in the sealed kneader 1 and configured to detect kneading parameters are connected to the controller 12. During kneading, the temperature of the kneading material, the pressure of the pressurizing lid in the kneader, the effective value of the alternating current supplied to the electric motor, the direct current value supplied to the electric motor, the power value consumed by the electric motor, the load ratio of the electric motor, or the kneading parameter of the output torque of the electric motor is repeatedly sampled and acquired by the controller 12 and then stored. The controller 12 also has various calculation functions.

For example, the temperature of the kneading material is detected by the temperature sensor 10 as illustrated in FIG. 1, and a detection signal thereof is acquired by the controller 12. The pressure of the pressurizing lid 9a in the sealed kneader 1 is a pressure load due to the weight pressure of the pressurizing lid 9a that suppresses uplift of the kneading material from above the kneading tank 2, and is detected by an arbitrary sensor, and the detection signal is acquired by the controller 12.

In a case where the electric motor is an alternating current electric motor, the effective value of the alternating current supplied to the electric motor is calculated on the basis of the detection signal of a current sensor. For example, the effective value of the alternating current can be calculated by dividing the maximum value of the instantaneous value by $\sqrt{2}$. In a case where the electric motor is a direct current electric motor, the direct current value supplied to the electric motor is detected on the basis of the detection signal of the current sensor.

The power value consumed by the electric motor is detected by, for example, the power sensor 11 provided in the electric motor 8 as illustrated in FIG. 2, and a detection signal thereof is acquired by the controller. For example, in a case where the electric motor is an alternating current electric motor, the power value consumed by the electric motor is an active power P, and is expressed by the following Formula (1).

$$\text{Active power } P = V \cdot I \cdot \cos\theta \ \ldots \ (1)$$

In the above Formula (1), the effective value of the voltage applied to the electric motor is V, the effective value of the alternating current supplied to the electric motor is I, the phase difference between the voltage and the current is $\theta$, and the power factor is $\cos\theta$.

In a case where the electric motor is a direct current electric motor, the power value consumed by the electric motor is represented by a product of a voltage V applied to the electric motor and a direct current value I supplied to the electric motor.

In addition, the load ratio of the electric motor is expressed by the following Formula (2) on the basis of, for example, the power value consumed by the electric motor described above and the rated value of the electric motor.

$$\text{Load ratio (\%)} = [\text{power value (W) consumed by electric motor/rated value (W) of electric motor}] \times 100 \qquad (2)$$

The output torque of the electric motor is detected by, for example, a torque sensor provided in the electric motor. Alternatively, in the means that does not depend on the torque sensor, the output torque is calculated on the basis of, for example, a power value consumed by the electric motor and a number of rotations or an angular velocity of the electric motor. A known sensor can be used as each sensor for acquiring the kneading parameter described above.

Although FIG. 1 illustrates a configuration in which the temperature of the kneading material and the power value consumed by the electric motor are acquired as the kneading parameters, the configuration is not limited thereto.

As illustrated in FIG. 1, the controller 12 includes an acquisition unit 13 that repeatedly samples and acquires at least one of the kneading parameters described above. In addition, in FIG. 1, the controller 12 includes a calculation unit 14 that calculates, as an evaluation index, a moving average of the input value acquired by the acquisition unit 13 over a predetermined arbitrary time span, a variance over an arbitrary time span, a standard deviation over an arbitrary time span, a deviation between the input value and the moving average over the arbitrary time span, a value obtained by processing these, or a combination of these. For example, the calculation unit 14 calculates, for the input value, (a) a moving average over a predetermined arbitrary time span immediately before the current time, (b) a variance over a predetermined arbitrary time span immediately before the current time, (c) a standard deviation over a predetermined arbitrary time span immediately before the current time, (d) a deviation between the input value and the moving average over the predetermined arbitrary time span immediately before the current time, or a value obtained by processing (a) to (d), or a combination of (a) to (d) and a value obtained by processing these.

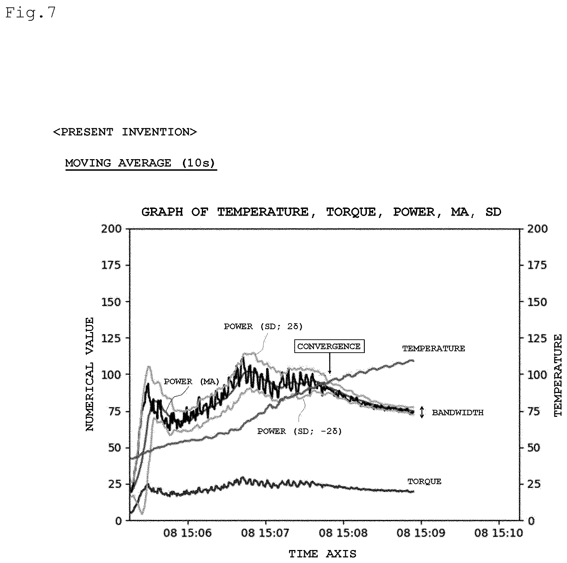

In a configuration in which the pair of tangential rotors of the kneader rotate at different speeds, it is preferable that the calculation unit 14 calculates the input values as: (A1) the moving average over the period until the kneading rotors 3A and 3B recover to the same phase immediately before the current time, (B1) the variance over the period until the kneading rotors 3A and 3B recover to the same phase immediately before the current time, (C1) the standard deviation over the period until the kneading rotors 3A and 3B recover to the same phase immediately before the current time, (D1) the deviation between the input value and the moving average over the period until the kneading rotors 3A and 3B recover to the same phase immediately before the current time, or values obtained by processing (A1) to (D1), or, combinations of (A1) to (D1) and values obtained by processing these. As illustrated in FIG. 7 described later, by using the period until the kneading rotors 3A and 3B recover to the same phase as a predetermined arbitrary time span, the state of each cycle until the kneading rotors 3A and 3B recover from a certain phase to the same phase can be accurately grasped, and as a result, the change in physical properties of the kneading material can be more easily grasped. Thus, for example, the determination of the end timing of kneading can be performed at an appropriate timing.

The moving average can be calculated using a known moving average calculation method such as simple moving average (SMA), weighted moving average (WMA), exponential moving average (EMA), and centered moving average (CMA).

In FIG. 3, as an example, a pair of gears is shown, where the number of teeth of a drive gear is 25 and the number of teeth of a driven gear is 30. In this case, when the drive rotor connected to the drive gear rotates 6 times (the driven rotor rotates 5 times), the drive rotor and the driven rotor return to the same phase. FIG. 3 is a diagram of the pair of rotor shafts as viewed from the gear side, and illustrates a state in which the pair of gears meshes. In FIG. 3, for the sake of convenience, the positions of the valley portions of the driven gear with which the teeth of the drive gear mesh are indicated by circled numbers.

In FIG. 1, the controller 12 is configured to be able to evaluate a change in kneading state on the basis of the evaluation index calculated by the calculation unit 14. Specifically, the controller 12 further includes a determiner 15 that determines the end timing of kneading on the basis of the evaluation index calculated by the calculation unit, and a notifier 16 that provides notification of the end timing of kneading when the determiner 15 determines that it is the end timing of kneading.

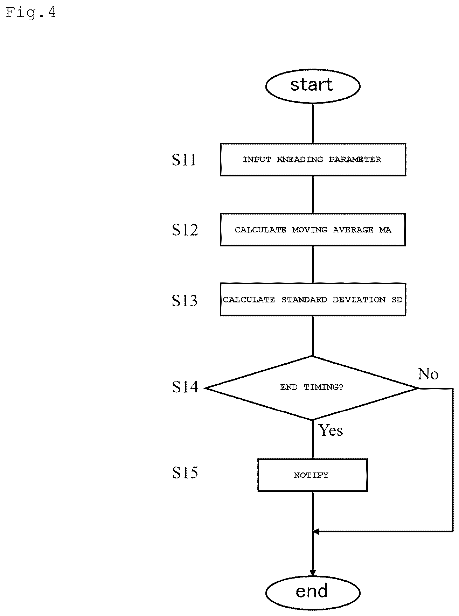

The determiner 15 determines the end timing on the basis of the moving average, variance, standard deviation, and deviation calculated by the calculation unit 14. This determination method is not particularly limited, and a method described with reference to FIG. 4 or the like can be used.

The notifier 16 has a function of notification of the end of kneading. The notification means is not particularly limited, and it is possible to adopt one or a combination of means such as displaying the end on a monitor for an operator, notifying the operator of the end by sound or voice, notifying those outside of the end by communication, and notifying the operator of the end by lamp display.

Next, FIG. 4 illustrates an example of a processing procedure during kneading executed by the controller. In the flowchart of FIG. 4, the processing from the start to the end is repeatedly performed at predetermined time intervals. As the kneading parameter, those described above are appropriately used, but in the following description, an example using a power value will be described.

First, the power value detected by the power sensor is acquired by the acquisition unit, for example, every predetermined sampling period (for example, every 0.1 seconds to 1 second) (step S11). The acquired power value is stored in the storage unit every time the power value is acquired.

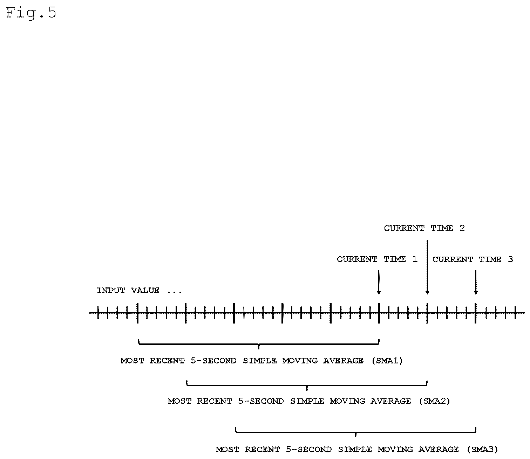

In step S12, the calculation unit calculates, for example, a moving average of power values over n seconds immediately before the current time on the basis of the acquired power value. FIG. 5 is a conceptual diagram for calculating a simple moving average (SMA) as an example of the moving average. In FIG. 5, for example, in a configuration in which the power value is acquired every 0.2 seconds, the calculation unit calculates a simple moving average (5-second simple moving average) for 5 seconds immediately before the current time. Note that the simple moving average is calculated in a form including the value of the input value at the current time. For example, SMA1 is calculated at the current time 1, SMA2 is calculated at the current time 2 (1 second after the current time 1), and SMA3 is calculated at the current time 3 (1 second after the current time 2).

In step S13, the calculation unit calculates, for example, a standard deviation SD of power values over n seconds immediately before the current time on the basis of the acquired power value. The concept of n seconds immediately before the current time is similar to that in FIG. 5.

In step S14, the determiner determines a kneading end timing. The determination of the end timing is performed, for example, on the basis of the calculated standard deviation SD. Specifically, it is determined whether the standard deviation SD is equal to or less than the determination threshold. When the standard deviation SD is not equal to or less than the determination threshold, it is determined that it is not the end timing (step S14: No), and the process ends as it is. On the other hand, when the standard deviation SD is equal to or less than the determination threshold, it is determined that it is the end timing (step S14: Yes). Here, the determination threshold is a value that can be regarded as convergence of the variation in the power value, and is appropriately set by an experiment or the like. The determination threshold may be set to a different value depending on the kneading parameter to be used.

When it is determined in step S14 that it is the end timing, for example, the supply of the drive power to the motor unit is stopped. If necessary, the notifier notifies the operator of the end of kneading (step S15).

As described above, the processing procedure of FIG. 4 is a combination of the moving average and the standard deviation of the same period. Note that the method of determining the end timing is not limited to the above method. For example, the variance of the power value over n seconds immediately before the current time may be used, and the variance may be compared with a determination threshold, and the end timing may be determined in a case where the variance is equal to or less than the determination threshold. Note that the variance is calculated as a value of the square of the standard deviation. The determination may be made using the moving average MA itself as a determination index. In this case, the end timing may be determined on the basis of the fact that the value of the input value at the current time falls within a range of 80% to 120% (preferably 90% to 110%) of the moving average for a predetermined time.

In addition to the level of the kneading parameter, the determination may be made on the basis of the level of the moving average MA of the calculated kneading parameter, the first derivative of the moving average MA and its change, the maximum/minimum of the moving average MA, the standard deviation SD, or a combination thereof.

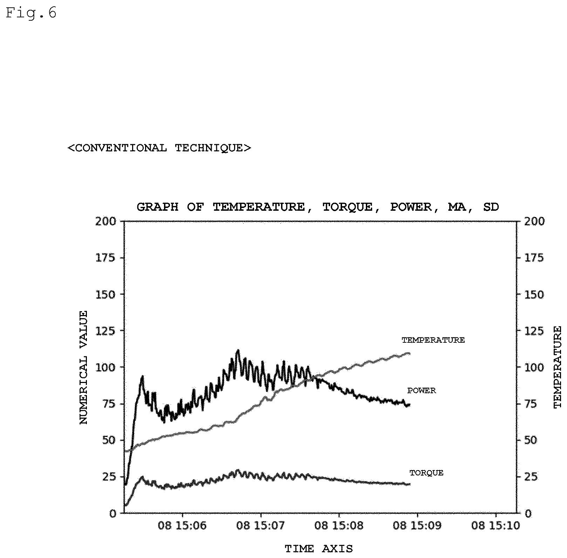

Next, the conventional technique and the present invention will be described in comparison with specific graphs in FIGS. 6 to 8. First, FIG. 6 illustrates a conventional technique. FIG. 6 illustrates temporal variations of various parameters when a rubber compound is kneaded as a kneading material using a tangential sealed kneader having a pair of gears in which the number m of teeth of a drive gear is 25 and the number n of teeth of a driven gear is 30. In this example, kneading is performed at a number of rotations of the drive rotor of 36 rpm and number of rotations of the driven rotor of 30 rpm, and the drive rotor and the driven rotor return to the same phase every 10 seconds. Here, the temperature in the drawing indicates the temperature (continuous value) of the kneading material detected by the temperature sensor, the electric power indicates the electric power value consumed by the electric motor detected by the electric power sensor (specifically, the active power of the alternating current electric motor), and the torque indicates the torque (continuous value) of the electric motor detected by the torque sensor.

In FIG. 6, the kneading parameters are monitored by a conventional method, and it can be seen that the values of the kneading parameters fluctuate discretely in a zigzag manner. In particular, the power fluctuates greatly in zigzag. In such a graph, it is relatively difficult to grasp the temporal change of the state of the kneading material.

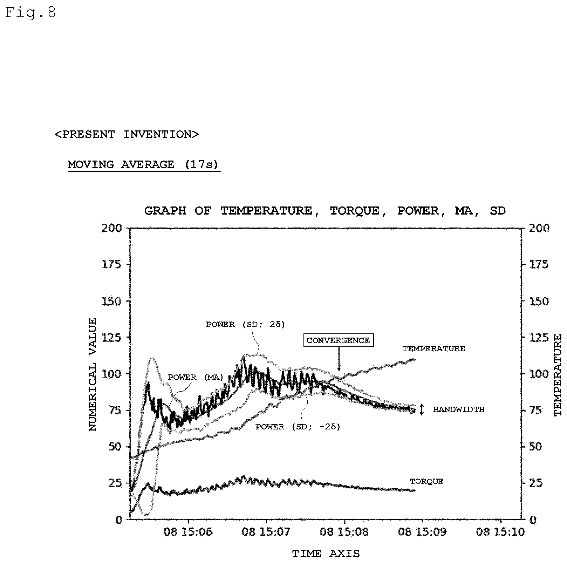

In contrast, FIGS. 7 and 8 illustrate graphs to which the method of the present invention is applied. Specifically, the graph visualizes the calculated simple moving average (SMA) of the power value over the predetermined time span and the standard deviation $(2\sigma, -2\sigma)$ of the power value over the same time span in addition to the temporal variation of the original kneading parameter. Note that, in FIGS. 7 and 8, the setting of the time span for calculating a simple moving average (SMA) or the like is different. That is, in FIG. 7, the time span for which the simple moving average SMA and the standard deviation are calculated is set to 10 seconds, and in FIG. 8, the time span is set to 17 seconds. In FIG. 7, the time span to be calculated is a period until the pair of rotors recover to the same phase. On the other hand, in FIG. 8, the time span is arbitrarily set.

In FIG. 7, the simple moving average $W_{SMA}$ of the power value was calculated as a simple moving average over 10 seconds immediately before the current time. The value was calculated from Formula (3), where n denotes the number of samples in the most recent 10 seconds.

In addition, the standard deviation $W_{SD}$ of the power values sampled n times over the most recent 10 seconds immediately before the current time was calculated using Formula (4).

[Mathematical formula 1]

$$\text{Moving average } W_{MA} = \frac{\sum_{i=1}^{n} W_i}{n} \qquad (3)$$

$$\text{Standard deviation } W_{SD} = \sqrt{\frac{1}{n}\sum_{i=1}^{n}(W_i - W_{MA})^2} \qquad (4)$$

As shown in FIG. 7, transitions of the standard deviation (power (SD; $2\delta$), power (SD; $-2\delta$)) can be plotted on the positive and negative sides around a 10 second simple moving average line of power (power (SMA)). As can be seen from FIG. 7, the bandwidths of the positive and negative standard deviations greatly converge with the time zone immediately before "15: 08" as a boundary. This means that the variation in power consumed by the electric motor has largely converged from this time zone, indicating that the state of the entire kneading material has progressed, for example, kneading and variance has progressed due to the progress of kneading, and the entire kneading material has been homogenized. The time point of the state change can be used as an index for indirectly determining the end timing, such as directly setting the time point of the state change as the end timing of the kneading, elapsing a certain time after the state change, or inputting a certain amount of energy. Therefore, by determining a case where the standard deviation is equal to or less than the determination threshold, it is possible to determine the convergence of the bandwidth as illustrated in FIG. 7, which leads to determination of the end timing. In FIG. 7, the fluctuating power value is smoothed by a simple moving average, and a variation (standard deviation) is visualized.

That is, in FIG. 8, the time span over which the simple moving average SMA and the standard deviation are calculated is set to 17 seconds. As shown in FIG. 8, the band width of the standard deviation converges toward the final stage of kneading, and even in this case, the end timing or the like can be determined by comparing the standard deviation with a determination threshold or the like. The convergence behavior of the standard deviation is gentler than that in FIG. 7.

From the results of FIGS. 7 and 8, it can be said that it is easier to grasp the state change by setting the time of the period until the pair of rotors recover to the same phase as the time span over which the moving average, the standard deviation, and the like are calculated. By using the characteristic cycle in the configuration rotating at such different speeds for the calculation processing, the change in physical properties of the kneading material can be easily grasped, and the end timing can be accurately determined.

On the other hand, in the conventional method, for example, the end temperature of kneading is set to a predetermined temperature (for example, 120°C), and the kneading is ended when the temperature of the kneading material reaches the predetermined temperature. Since the temperature of the kneading material changes depending on the heat capacity of the raw material, the amount of input energy, and the amount of energy lost by heat removal or heat dissipation, it can be said that the end determination based on the temperature level is a determination criterion based on integration of the amount of energy input from the start of kneading. On the other hand, the above method according to the present invention provides a means for acquiring a kneading parameter such as an electric power value of an electric motor in real time, and performing kneading while determining a tendency of change in the kneading parameter, convergence of variations, and the like using a moving average and a standard deviation over the same period, so that a change in physical properties of a kneading material in the middle of kneading can be grasped. Therefore, the end of kneading can be performed quickly and at an appropriate timing, and an efficient kneading process can be performed.

FIGS. 7 and 8 illustrate the results obtained by using the power value consumed by the electric motor as the kneading parameters, but the change in physical properties of the kneading material can be similarly grasped with other kneading parameters. For example, the effective value of the alternating current supplied to the electric motor, the direct current value supplied to the electric motor, the load ratio of the electric motor, and the output torque of the electric motor are parameters closely related to the power value consumed by the electric motor, and similar results are obtained.

In the above description, the simple moving average is used as the smoothing process, but a moving average calculated by another moving average method or the like may be used. Hereinafter, a result of each processing is illustrated using a power chart.

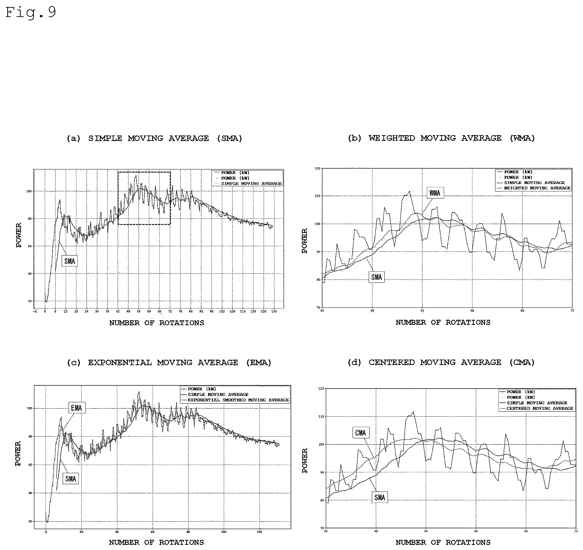

First, the power chart of FIG. 9(a) shows a simple moving average (SMA), and the other graphs of FIGS. 9(b) to 9(d) are shown in comparison with the simple moving average. In each power chart shown in FIG. 9, the horizontal axis represents the number of rotations of the drive rotor. In this case, when the drive rotor rotates 6 times (the driven rotor rotates 5 times), the drive rotor and the driven rotor return to the same phase. In addition, the time span over which the moving average is calculated is set as a period until the pair of rotors recover to the same phase, and the moving average is calculated over the time during which the drive rotor rotates 6 times.

The weighted moving average (WMA) in FIG. 9(b) is a method of linearly weighting, and the weight is gradually linearly reduced from the present to the past to make it easier to react to fluctuations. As illustrated in FIG. 9(b), WMA has improved followability to raw time-series data as compared with SMA. The WMA is calculated by the following Formula (5) and Formula (6).

[Mathematical formula 2]

$$WMA = \frac{\sum_i w_i p_i}{\sum_i w_i} \tag{5}$$

$$w_i = weight\left(1 - \frac{t_{end} - t_i}{t_{period}}\right) \tag{6}$$

$W_i$ = weight, weight = weight coefficient, $t_i$ = time, $t_{end}$ = last time in the time span, $t_{period}$ = duration of the time span

The exponential moving average (EMA) in FIG. 9(c) is a method of weighting exponentially decreasing. As illustrated in FIG. 9(c), EMA has improved followability to raw time-series data as compared with SMA. However, the amplitude is relatively large. For example, the exponential moving average St at the time t is calculated by the following Formula (7). The initial value is obtained by a simple moving average of previous raw time-series data, and the EMA is recursively obtained.
[Mathematical formula 3]

$$S_t = \alpha X_t + (1 - \alpha)S_{t-1}$$

$$(7)$$

α: smoothing coefficient (0<α<1)
St: raw data at time t

The centered moving average (CMA) in FIG. 9(d) is a method of taking an average of N/2 from the present time into the past and N/2 from the present time into the future. As illustrated in FIG. 9(d), CMA has improved followability to raw time-series data as compared with SMA.

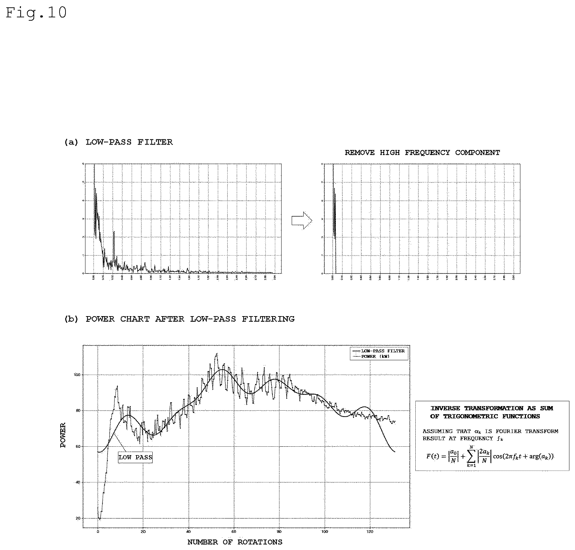

FIG. 10 illustrates an example of smoothing process by a low-pass filter. For example, the discrete Fourier transform is performed to remove high-frequency components (see FIG. 10(a)). As shown in FIG. 10(b), in the middle stage of the kneading process, followability is shown well, but fitting cannot be performed immediately after the start or immediately before the end of the kneading process.

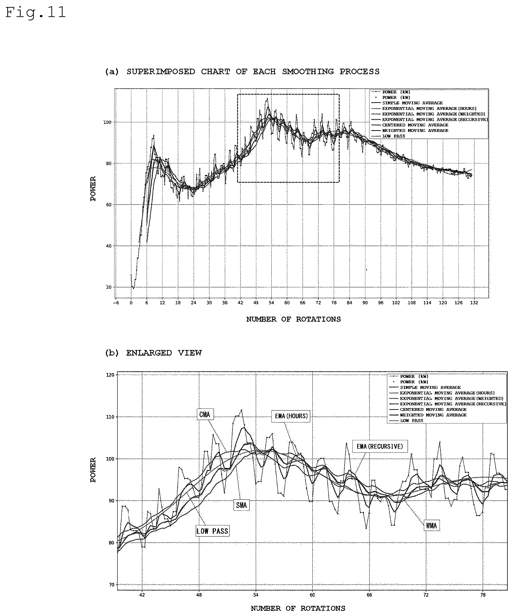

FIG. 11 shows a superimposed chart of each smoothing process. As illustrated in FIG. 11, there is a difference in the degree of following the fluctuation depending on the method of smoothing process, and in FIG. 11, the degree of followability is stronger in the order of EMA, WMA, and SMA (CMA). The results of evaluating these methods with a mean square error are shown in Table 1.

[Table 1]

| Smoothing process | Initial stage (start to BIT) | Medium stage (BIT to large amplitude) | Final stage (small amplitude to end) | Entire time span |
|---|---|---|---|---|
| SMA | 84.95 | 24.61 | 4.17 | 39.97 |
| WMA | 43.88 | 21.87 | 3.12 | 23.09 |
| EMA | 21.27 | 12.26 | 1.52 | 11.53 |
| CMA | 19.09 | 19.56 | 2.44 | 13.05 |
| Low pass | 103.28 | 26.82 | 30.79 | 60.08 |
| EMA × low pass | 23.75 | 23.85 | 3.50 | 15.83 |

As shown in Table 1, the EMA fits the raw time-series data with good followability although vibration remains. In addition, CMA is considered to be suitable for prediction of final torque (power), final temperature, and amplitude from which vibration has been removed.

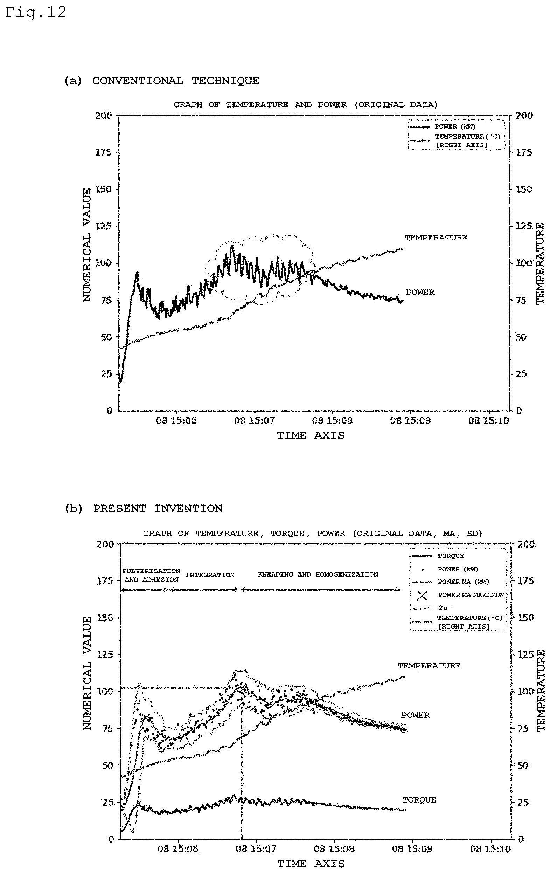

Next, another mode of the evaluation method using the moving average MA will be described. As a conventional method of determining a change in a kneading state, for example, a method of visually evaluating a tendency of a change in a power chart is known. For example, the time from the input of a compounding agent such as carbon black to the integration thereof is widely recognized and emphasized in the rubber field as Black Incorporation Time (BIT). However, as illustrated in FIG. 12(a), the actual power curve is a discretely zigzag polygonal line, and which point in a range indicated by a cloud in the figure is set as a peak (maximum or minimum) depends on human subjectivity. For this reason, when the actual power curve is evaluated by the conventional technique, the change in the power value in a short time is large, so that the grasp of the peak position and the tendency of the change is not necessarily clear.

By providing a new evaluation method of the present invention, the above problem can also be solved. In FIG. 12(b), as an example to which the present invention is applied, the maximum is specified using the moving average MA.

A specific procedure is described below.

(1) As described above, the moving average MA of the most recent arbitrary time span is calculated.
(2) The tendency is grasped from the first derivative of the moving average MA, the inclination of the moving average MA, or the distribution of the kneading parameter with respect to the moving average MA.
(3) The maximum and the minimum are specified by comparing the first derivative and the second derivative of the moving average MA or the values of continuous moving average MA with each other. For example, a point at which the first derivative of the moving average MA changes from positive to negative, or a point at which the first derivative is 0 and the second derivative is negative can be specified as the maximum of the original kneading parameter. In addition, a point at which the first derivative of the moving average MA changes from negative to positive, or a point at which the first derivative is 0 and the second derivative is positive can be specified as the minimum. The means for specifying the maximum and the minimum using the moving average MA may be a means for specifying from a distribution or comparison of current and previous values in addition to a method using a first derivative or a second derivative or higher derivative.

Further, (4) the variance and standard deviation (SD) may be obtained from the distribution of the kneading parameters in the same period with respect to the target period over which the moving average MA is calculated, and the change may be observed. In FIG. 12(b), the moving average MA and the standard deviation SD are displayed and visualized together with the kneading parameters.

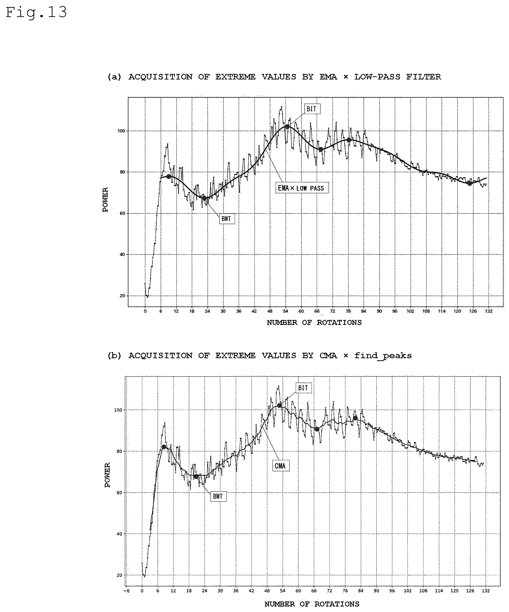

FIG. 13 shows a specific method for acquiring BIT and Black Wetting Time (BWT) as extreme values. The BIT is a point at which carbon enters rubber, rubbers adhere to each other, and become large rubber lumps, and when they are integrated, the torque shows a maximum value, and the BWT is a point at which carbon black is sprinkled on the segmented polymer, the polymer is easily slipped, and the torque shows a minimum value. FIG. 13(a) illustrates a method of differentiating a function obtained by applying a low-pass filter to the EMA to acquire an extreme value. After taking the EMA, a low-pass filter can be applied for good smoothing (see Table 1). In addition, since the low-pass filter is acquired as a differentiable function, the low-pass filter is suitable for a method of differentiating and acquiring an extreme value. FIG. 13(b) illustrates a method of applying the function of find_peaks of SciPy to CMA to acquire the extreme value. In find_peaks, for example, regarding the acquisition of the maximum value, a point higher than both sides is set as the maximum value.

As illustrated in FIGS. 12 and 13, the maximum and the minimum can be grasped by smoothing using the moving average MA and further combining other processing. In addition, it is considered that specifying the maximum leads to grasping of the BIT, and specifying the minimum leads to grasping of the BWT. In addition, the elapsed time from the start of kneading to the maximum, the elapsed time from the maximum to the convergence of the standard deviation SD, and the like can also be evaluated.

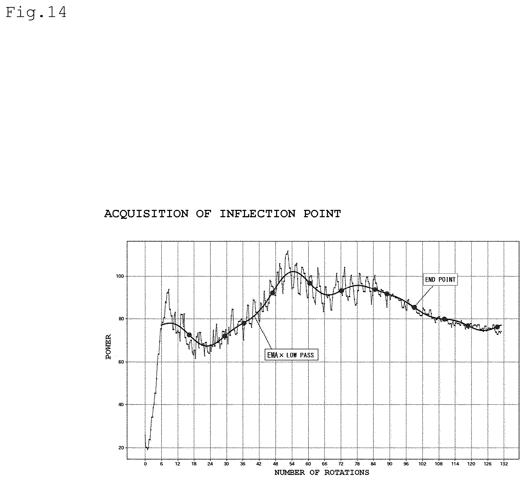

As another mode of the evaluation method using the moving average MA, it is also possible to grasp a point (inflection point) at which the inclination of the kneading parameter changes at the end of the kneading process. After the inflection point, the rubber becomes soft due to the influence of temperature, and even if the rubber is further kneaded, the rubber cannot be effectively kneaded. Therefore, the end of rubber kneading can be determined by grasping the inflection point. For example, an inflection point can be obtained by performing a second-order derivative of a function obtained by applying a low-pass filter to EMA. For example, in FIG. 14, it can be determined that a specific inflection point among circles illustrated on the graph indicates the end point.

FIG. 14 illustrates 12 inflection points. There is always an odd number of inflection points between the extreme values (maximum value and minimum value) illustrated in FIG. 13(a) including the case of one inflection point, but an odd-numbered inflection point after the third maximum value existing in FIG. 13(a) is a candidate for the end point. Which maximum value is followed by attention is arbitrarily set depending on the mixing to be kneaded and the kneading pattern. In this determination, a threshold for determining the vicinity of 0 (zero) with respect to a value obtained by second-order differentiation is set, and when a value obtained by performing a second-order derivative after an odd-numbered inflection point following the maximum value exceeds a positive threshold in the vicinity of 0 (zero), it can be determined that the immediately preceding inflection point indicates an end point. For example, in FIG. 14, it can be determined that an inflection point shown around 100 rotations of the horizontal axis indicates the end point.

The kneading material passes through the respective stages of "pulverization and adhesion", "integration", and "kneading and homogenization" in the process from charging to completion of kneading, and finally a homogenized kneading material is obtained. As described above, for example, by performing smoothing using the moving average MA, the maximum, the minimum, the inflection point, and the like can be grasped, and the state of each stage can be accurately grasped. As a result, it is considered that the kneading can be stably performed even under different batches and conditions.

In the present specification, the population variance and the population standard deviation are exemplified as application examples of the technology, but the invention is not limited thereto, and sample variance, sample standard deviation, sample unbiased variance, and sample unbiased standard deviation may be used.

According to the present invention described above, for example, the following effects can be obtained.

• The inclination of the moving average MA clearly shows the tendency of the kneading parameters.
• The maximum and minimum of the kneading parameters can be clearly grasped. Human subjectivity exerts no effect.
• The distribution of the kneading parameter with respect to the moving average MA is regarded as the standard deviation SD, and the magnitude of the fluctuation range is grasped.
• From the convergence point of the standard deviation SD and the tendency of convergence, the state change of kneading can be grasped.

- The deviation of the distribution of the kneading parameter with respect to the moving average MA can predict the tendency of the change in the kneading parameter in the future. For example, in FIG. 12(b), with the convergence point (see FIG. 7) as a boundary, the points where the power is plotted thereafter are concentrated below the moving average MA, and are hardly distributed above the moving average MA. Therefore, by grasping such a distribution bias with respect to the moving average, it is possible to predict a tendency of a change in the moving average that the moving average MA continues to decrease rightward and downward thereafter.

In addition, tendency determination can be performed by using each of short-term and long-term moving averages. Each moving average can be calculated by the method as described above, and for example, the long-term moving average is calculated for a section of an integral multiple (for example, twice to five times) of the target section over which the short-term moving average is calculated. When the short-term moving average is larger than the long-term moving average, it can be determined that the trend is rising, and when the long-term moving average is larger than the short-term moving average, it can be determined that the trend is falling.

The specific configurations of the evaluation method and the kneader of the present invention are not limited to the configurations in the above drawings, and can be appropriately changed.

In the examples illustrated in the above drawings, the case where the number of rotations of the drive rotor is constant has been described. However, for example, the present invention can also be applied to a case where the number of rotations (=r) of the drive rotor changes halfway (for example, r1 → r2). In this case, the time required for the drive rotor to make one rotation also changes in accordance with changes in the number of rotations. Therefore, even after the number of rotations changes, the time span over which the moving average or the like is calculated may be adjusted according to the period after the change so that the moving average or the like can continue to be calculated over a period in which the drive rotor completes the same number of rotations. For example, before the change in number of rotations, a moving average or the like for 10 seconds (a period during which the drive rotor rotates 6 times) is calculated. However, after the number of rotations is reduced to two-thirds, a moving average or the like for 15 seconds (a period during which the drive rotor rotates 6 times) may be calculated to change the time span to be calculated. As a result, even in a case where the rotation speed of the pair of rotors changes halfway, the kneading state can be favorably and continuously grasped.

Further, in accordance with changes in rotation speed, the time series data indexed by sampling time can be converted into number-of-rotations series data or rotation angle series data indexed by number of rotations, rotation angle, or angular distance, and utilized. Since the time series data acquired by sampling includes the sampling time and the number of rotations (r/min) or the angular velocity (rad/s or °/s) of the rotor, the displacement angle between the sampling time $t_n$ and the sampling time $t_{n+1}$ can be calculated. When the displacement angle is integrated, the number of rotations (r or rotation) or a rotation angle or an angular distance (rad or °) at each sampling time at which the rotor rotates from the initial state is obtained, and new data can be derived and added to the time series data.

From the derived time series data, it is possible to use number-of-rotations series data or rotation angle series data indexed by number of rotations, rotation angle, or angular distance instead of the sampling time. Here, the series that serves as the index is referred to as the index series.

For example, when the number-of-rotations series data indexed by number of rotation is used, it is possible to obtain the moving average or the standard deviation of the values of the series other than the index series during an arbitrary number of rotations, such as during 6 rotations of the drive rotor. In this manner, by deriving the number-of-rotations series data or the rotation angle series data indexed by number of rotations or rotation angle or angular distance from the time series data, it is possible to obtain an effect similar to that of changing the time span over which the moving average is calculated in accordance with changes in rotation speed.

In both the time series data and the number-of-rotations series data or the rotation angle series data indexed by number of rotations or rotation angle, the original data can be resampled and used so that the value of the index series becomes an arbitrary constant interval. For example, in the case of number-of-rotations series data indexed by number of rotations, resampling can be performed at constant intervals of one-sixth of a rotation. At this time, for a series other than the index series, a value corresponding to the index series is acquired from the original number-of-rotations series data by linear interpolation or primary spline interpolation, secondary spline interpolation, or tertiary spline interpolation, and new number-of-rotations series data can be derived.

The resampling in which the values of the index series are set to constant intervals is performed before the discrete Fourier transform is performed to evaluate the periodic variation of any data series or the spectrum of the signal or before the low-pass filter is applied.

In FIG. 13(a), after converting to a number-of-rotations series data, an exponential smoothed moving average (EMA) is calculated, and resampling is performed so that the values of the index series, i.e., the number of rotations, are at regular intervals, followed by the application of a low-pass filter. The horizontal axis represents the number of rotations.

Although the method of evaluating kneading in real time has been described above, the present invention may be evaluated by analyzing accumulated data later. As a method of performing analysis later, a method of calculating the moving average MA and the standard deviation SD based on the collected and recorded kneading parameters, and superimposing the kneading parameters, the moving average MA, and the standard deviation SD on a graph to visualize and display the convergence timing (see FIGS. 7 to 8), a method of performing similar display for two different batches and comparing the two batches, or the like can be adopted.

The calculation of the moving average MA and the standard deviation SD, the conversion into the number-of-rotations series data or the rotation angle series data, the conversion and derivation of the data series, the application of the resampling and the low-pass filter, and the processing based on the data series are performed in a conversion routine for inputting one or a plurality of data series and conversion parameters and outputting one or a plurality of derived data series.

In addition, a plurality of conversion routines are connected in a chained manner in a predefined order according to a purpose, and a target data series is obtained. This chain of a plurality of predefined conversion routines is referred to as a pipeline.

In the example of FIG. 13(a), the pipeline is configured as follows.

From the original time series data, a number-of-rotations series (unit: r) from the initial state is derived on the basis of the sampling time series and the rotation speed series (r/min).

Using the number-of-rotations series as an index, an exponential smoothed moving average (EMA) calculation is performed during 6 rotations of the power series to derive an EMA series of power.

Using the number-of-rotations series and the EMA series as inputs, a low-pass filter is applied to smooth the curve.

An extreme value is obtained using a function of the smoothed curve as an input (FIG. 13(a)).

The inflection point is obtained using the function of the smoothed curve as an input (FIG. 14).

Although a plurality of conversion routines are applied in one pipeline, the use of a plurality of pipelines in combination can be used to grasp the kneading state and the change in physical properties.

In the pipeline applied to FIG. 12(b), it can be seen that the standard deviation of the power value converges after 15:08.

In the same period, as in the example of FIG. 13(a) described above, a state in which the function of the smoothing curve of the power value EMA exceeds the maximum value and the first-order derivative continues to be negative, and as in the example of FIG. 14, the second-order derivative of the processed function exceeds the positive threshold near 0 and the sign is changed after the odd-numbered inflection point after the last maximum value, so that the step can be determined to be completed.

INDUSTRIAL APPLICABILITY

The method for evaluating a kneading state and the kneader according to the present invention are capable of detecting a change in physical properties of a kneading material using various kneading parameters in a sealed kneader having a pair of rotors, and thus can be widely used in kneading of rubber, plastic, ceramics, and the like. As a result, it can be expected to contribute to improvement of productivity and stabilization of quality, such as shortening of kneading time by grasping the end point of kneading with higher accuracy.

REFERENCE SIGNS LIST

| 1 | Sealed kneader |
|---|---|
| 2 | Kneading tank |
| 2A, 2B | Rotor chamber |
| 2C | Ridge wall portion |
| 3A, 3B | Kneading rotor |
| 4a, 4b | Blade |
| 5A, 5B | Rotor shaft |
| 6A, 6B | Bearing |
| 7A, 7B | Gear |
| 7a | Attachment hole |
| 7b | Keyway |
| 8 | Electric motor |
| 8a | Circuit unit |
| 8b | Motor unit |
| 9a | Pressurizing lid |
| 9b | Rod |
| 10 | Temperature sensor |

## EP 4 729 262 A1

10a     Detection end
11      Power sensor
12      Controller
13      Acquisition unit
14      Calculation unit
15      Determiner
16      Notifier
17      Coupling

## Claims

1. A method for evaluating a kneading state in a kneader including a pair of rotors connected by a pair of gears and rotated by driving of an electric motor, the method comprising:
repeatedly sampling and acquiring a temperature of a kneading material, a pressure of a pressurizing lid in the kneader, an effective value of an alternating current supplied to the electric motor, a direct current value supplied to the electric motor, a power value consumed by the electric motor, a load ratio of the electric motor, an output torque of the electric motor, a number of rotations per minute of the rotor, or an angular velocity of the rotor; and using a moving average of the acquired input value over a predetermined arbitrary time span, a variance over an arbitrary time span, a standard deviation over an arbitrary time span, a deviation between the input value and the moving average over the arbitrary time span, a value acquired by processing these, or a combination of these, as an evaluation index.

2. The method for evaluating a kneading state according to claim 1, wherein in the kneader, the pair of rotors are tangential rotors, the gears each have a different integer number of teeth, and the pair of tangential rotors rotate at different speeds,
the evaluation method using, for the arbitrary time span, a period until the pair of rotors recover to the same phase immediately before the current time of the input value, and using a moving average over the period, a variance over the period, a standard deviation over the period, a deviation between the input value and the moving average over the period, or a combination of these as an evaluation index.

3. The method for evaluating a kneading state according to claim 1, wherein in a case where the rotation speed of the pair of rotors changes halfway in the kneader, the arbitrary time span is changed in accordance with the change in the rotation speed, and a moving average over the changed time span, a variance over the changed time span, a standard deviation over the changed time span, a deviation between the input value and the moving average over the changed time span, or a combination of these are calculated.

4. A method for evaluating a kneading state in a kneader including a pair of rotors connected by a pair of gears and rotated by driving of an electric motor, the method comprising:
repeatedly sampling and acquiring a temperature of a kneading material, a pressure of a pressurizing lid in the kneader, an effective value of an alternating current supplied to the electric motor, a direct current value supplied to the electric motor, a power value consumed by the electric motor, a load ratio of the electric motor, an output torque of the electric motor, a number of rotations per minute of the rotor, or an angular velocity of the rotor; and using a moving average of the acquired input value of one rotor over a predetermined arbitrary number of rotations, a variance over an arbitrary number of rotations, a standard deviation over an arbitrary number of rotations, a deviation between the input value and the moving average over the arbitrary number of rotations, a value acquired by processing these, or a combination of these, as an evaluation index.

5. The method for evaluating a kneading state according to claim 1, wherein an end timing is determined based on a fact that the variance, the standard deviation, or the deviation is equal to or less than a determination threshold.

6. The method for evaluating a kneading state according to claim 1, wherein the kneader is a kneader that kneads a non-Newtonian fluid.

7. The method for evaluating a kneading state according to claim 1, wherein a combination of a moving average over the period and a standard deviation over the periods is used as an evaluation index, and an end timing is determined based on a fact that the standard deviation is equal to or less than a determination threshold.

8. A kneader comprising a pair of rotors connected by a pair of gears and rotated by driving of an electric motor, further comprising:

an acquisition unit configured to repeatedly sample and acquire a temperature of a kneading material, a pressure of a pressurizing lid in the kneader, an effective value of an alternating current supplied to the electric motor, a direct current value supplied to the electric motor, a power value consumed by the electric motor, a load ratio of the electric motor, an output torque of the electric motor, a number of rotations per minute of the rotor, or an angular velocity of the rotor; and a calculation unit configured to calculate a moving average of the input value acquired by the acquisition unit over a predetermined arbitrary time span, a variance over an arbitrary time span, a standard deviation over an arbitrary time span, a deviation between the input value and the moving average over the arbitrary time span, a value acquired by processing these, or a combination of these.

9. The kneader according to claim 8, wherein the pair of rotors are tangential rotors, the gears each have a different integer number of teeth, and the pair of tangential rotors rotate at different speeds, and
the calculation unit uses, for the arbitrary time span, a period until the pair of rotors recover to the same phase immediately before the current time of the input value, and calculates a moving average over the period, a variance over the period, a standard deviation over the period, a deviation between the input value and the moving average over the period, or a combination of these.

10. The kneader according to claim 8, wherein in a case where the rotation speed of the pair of rotors changes halfway in the kneader, the calculation unit changes the arbitrary time span in accordance with the change in the rotation speed, and calculates a moving average over the changed time span, a variance over the changed time span, a standard deviation over the changed time span, a deviation between the input value and the moving average over the changed time span, or a combination of these.

11. A kneader comprising a pair of rotors connected by a pair of gears and rotated by driving of an electric motor, further comprising:
an acquisition unit configured to repeatedly sample and acquire a temperature of a kneading material, a pressure of a pressurizing lid in the kneader, an effective value of an alternating current supplied to the electric motor, a direct current value supplied to the electric motor, a power value consumed by the electric motor, a load ratio of the electric motor, an output torque of the electric motor, a number of rotations per minute of the rotor, or an angular velocity of the rotor; and a calculation unit configured to calculate a moving average of the acquired input value acquired by the acquisition unit of one rotor over a predetermined arbitrary number of rotations, a variance over an arbitrary number of rotations, a standard deviation over an arbitrary number of rotations, a deviation between the input value and the moving average over the arbitrary number of rotations, a value acquired by processing these, or a combination of these.

12. The kneader according to claim 8, comprising a determiner configured to determine an end timing based on a fact that the variance, the standard deviation, or the deviation calculated by the calculation unit is equal to or less than a determination threshold.

Fig.1

| | |
|---|---|
| ACQUISITION UNIT | 13 |
| CALCULATION UNIT | 14 |
| DETERMINER | 15 |
| NOTIFIER | 16 |

Fig.2

Fig.3

RIGHT SIDE OF DRAWING: DRIVEN GEAR
LEFT SIDE OF DRAWING : DRIVE GEAR

Fig.4

```
                    ┌─────────┐
                    (  start  )
                    └─────────┘
                         │
          ┌──────────────────────────────────┐
S11       │    INPUT KNEADING PARAMETER       │
          └──────────────────────────────────┘
                         │
          ┌──────────────────────────────────┐
S12       │    CALCULATE MOVING AVERAGE MA    │
          └──────────────────────────────────┘
                         │
          ┌──────────────────────────────────┐
S13       │  CALCULATE STANDARD DEVIATION SD  │
          └──────────────────────────────────┘
                         │
                       ◇◇◇◇◇                     No
S14      ◇◇◇   END TIMING?   ◇◇◇ ─────────────┐
                       ◇◇◇◇◇                    │
                         │ Yes                   │
              ┌──────────────────┐              │
S15           │      NOTIFY       │              │
              └──────────────────┘              │
                         │←─────────────────────┘
                    ┌─────────┐
                    (   end   )
                    └─────────┘
```

Fig.5

CURRENT TIME 2

CURRENT TIME 1  CURRENT TIME 3

INPUT VALUE ...

MOST RECENT 5-SECOND SIMPLE MOVING AVERAGE (SMA1)

MOST RECENT 5-SECOND SIMPLE MOVING AVERAGE (SMA2)

MOST RECENT 5-SECOND SIMPLE MOVING AVERAGE (SMA3)

Fig.6

<CONVENTIONAL TECHNIQUE>

GRAPH OF TEMPERATURE, TORQUE, POWER, MA, SD

Fig.7

<PRESENT INVENTION>

MOVING AVERAGE (10s)

GRAPH OF TEMPERATURE, TORQUE, POWER, MA, SD

Fig.8

<PRESENT INVENTION>

MOVING AVERAGE (17s)

GRAPH OF TEMPERATURE, TORQUE, POWER, MA, SD

TIME AXIS

Fig.9

(a) SIMPLE MOVING AVERAGE (SMA)

(b) WEIGHTED MOVING AVERAGE (WMA)

(c) EXPONENTIAL MOVING AVERAGE (EMA)

(d) CENTERED MOVING AVERAGE (CMA)

Fig.10

(a) LOW-PASS FILTER

REMOVE HIGH FREQUENCY COMPONENT

(b) POWER CHART AFTER LOW-PASS FILTERING

INVERSE TRANSFORMATION AS SUM OF TRIGONOMETRIC FUNCTIONS

ASSUMING THAT $\alpha_k$ IS FOURIER TRANSFORM RESULT AT FREQUENCY $f_k$

$$F(t) = \left|\frac{a_0}{N}\right| + \sum_{k=1}^{N} \left|\frac{2a_k}{N}\right| \cos(2\pi f_k t + \arg(a_k))$$

POWER

LOW PASS

NUMBER OF ROTATIONS

Fig.11

(a) SUPERIMPOSED CHART OF EACH SMOOTHING PROCESS

NUMBER OF ROTATIONS

(b) ENLARGED VIEW

NUMBER OF ROTATIONS

Fig.12

(a) CONVENTIONAL TECHNIQUE

(b) PRESENT INVENTION

Fig.13

(a) ACQUISITION OF EXTREME VALUES BY EMA × LOW-PASS FILTER

(b) ACQUISITION OF EXTREME VALUES BY CMA × find_peaks

Fig.14

ACQUISITION OF INFLECTION POINT

Fig.15

## INTERNATIONAL SEARCH REPORT

| International application No. |
| --- |
| **PCT/JP2024/021947** |

| A. | CLASSIFICATION OF SUBJECT MATTER |
| --- | --- |

***B29B 7/28***(2006.01)i; ***B01F 27/722***(2022.01)i; ***B01F 27/1144***(2022.01)i; ***B01F 27/2322***(2022.01)i; ***B01F 35/22***(2022.01)i; ***B01F 35/32***(2022.01)i; ***B01F 35/33***(2022.01)i; ***B01F 35/212***(2022.01)i; ***B01F 35/213***(2022.01)i; ***B29B 7/18***(2006.01)i

FI: B29B7/28; B29B7/18; B01F35/33; B01F35/32; B01F35/213; B01F35/212; B01F35/22; B01F27/1144; B01F27/2322; B01F27/722

According to International Patent Classification (IPC) or to both national classification and IPC

| B. | FIELDS SEARCHED |
| --- | --- |

Minimum documentation searched (classification system followed by classification symbols)

B29B7/28; B01F27/722; B01F27/1144; B01F27/2322; B01F35/22; B01F35/32; B01F35/33; B01F35/212; B01F35/213; B29B7/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2020-163355 A (NIPPON SPINDLE MFG CO., LTD.) 08 October 2020 (2020-10-08) paragraphs [0023]-[0027], [0035] | 1-12 |
| Y | JP 2016-37039 A (THE YOKOHAMA RUBBER CO., LTD.) 22 March 2016 (2016-03-22) paragraph [0050] | 1-12 |
| Y | JP 2017-61062 A (TOYO ELECTRIC MFG. CO., LTD.) 30 March 2017 (2017-03-30) paragraph [0018] | 1-12 |
| Y | JP 2019-1166 A (BANDO CHEMICAL INDUSTRIES, LTD.) 10 January 2019 (2019-01-10) paragraphs [0047]-[0048], fig. 1-2 | 1-12 |

☐ Further documents are listed in the continuation of Box C.　　☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **05 July 2024** | **23 July 2024** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

## INTERNATIONAL SEARCH REPORT
### Information on patent family members

International application No.

**PCT/JP2024/021947**

| Patent document cited in search report | | | Publication date (day/month/year) | Patent family member(s) | | | Publication date (day/month/year) |
|---|---|---|---|---|---|---|---|
| JP | 2020-163355 | A | 08 October 2020 | US | 2020/0306707 | A1 | |
| | | | | paragraphs [0031]-[0035], [0043] | | | |
| | | | | CN | 111744391 | A | |
| | | | | TW | 202035016 | A | |
| JP | 2016-37039 | A | 22 March 2016 | US | 2017/0225132 | A1 | |
| | | | | paragraph [0072] | | | |
| | | | | WO | 2016/021398 | A1 | |
| | | | | TW | 201609336 | A | |
| | | | | CN | 106573396 | A | |
| JP | 2017-61062 | A | 30 March 2017 | (Family: none) | | | |
| JP | 2019-1166 | A | 10 January 2019 | (Family: none) | | | |

Form PCT/ISA/210 (patent family annex) (July 2022)

33

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H09313916 A
- WO 2021033390 A